# EUROPÄISCHE PATENTSCHRIFT

(11) **EP 1 911 905 B1**
(45) Veröffentlichungstag und Bekanntmachung des Hinweises auf die Patenterteilung: **08.08.2018**
(21) Anmeldenummer: 07018463.5
(22) Anmeldetag: 20.09.2007
(51) Int. Cl.: E04F 15/18, F24D 3/14

(54) **Mehrschichtiges Aufbausystem für Bodenbeläge bei Fußbodenheizungen**
Multi-layer construction system for floor coverings with floor heating
Système de construction multicouche pour revêtements de sol pour chauffages par le sol

(30) Priorität: 04.10.2006 DE 202006015397 U
(43) Veröffentlichungstag der Anmeldung: 16.04.2008
(73) Patentinhaber: Blanke Gmbh & Co. Kg, 58642 Iserlohn-Stenglingsen (DE)
(72) Erfinder: Blanke, Peter Willhelm, 58642 Iserlohn (DE)
(74) Vertreter: Schneider, Uwe

(56) Entgegenhaltungen:
- WO-A1-2005/045153
- DE-A1- 2 535 522
- DE-U1- 8 107 402
- DE-U1- 8 703 642

## Beschreibung

Die Erfindung betrifft ein mehrschichtiges Aufbausystem für Bodenbeläge bei Fußbodenheizungen, insbesondere für die Verlegung keramischer Bodenbeläge im Dünnbettverfahren, gemäß Oberbegriff des Anspruches 1.

Keramische Beläge und insbesondere Fliesen werden heute üblicherweise im sogenannten Dünnbettverfahren verlegt, bei dem die keramischen Beläge in eine dünne Kleberschicht aus einem Fliesenmörtel verlegt werden. Dieses für normale Untergründe wie auf Wänden oder Estrichen zufriedenstellende Verfahren weist jedoch bei der Verarbeitung von keramischen Belägen auf Fußbodenheizungssystemen insofern Probleme auf, als durch die sich aufgrund der thermischen Belastung des Fußbodenheizungssystems ständig ändernden Verhältnisse des Untergrundes der keramische Belag besonderen Belastungen unterliegt. Daher wird üblicherweise über heute verarbeiteten Fußbodenheizungssystemen ein gegossener Estrich aufgebracht, der üblicherweise so dick ist, dass der Estrich als stabiler Untergrund des keramischen Belages dienen kann und von den unterschiedlichen Dehnungsverhältnissen im Bereich der Rohre des Fußbodenheizungssystems entkoppelt ist. Hierzu ist in der Regel eine Dicke des Estrichs von mehr als 45 mm, in der Regel von etwa 60 mm erforderlich, was zur Folge hat, dass der Fußbodenaufbau durch das Fußbodenheizungssystem, den Estrich und den keramischen Bodenbelag insgesamt sehr hoch aufbaut. Mehr als 100 mm Gesamtdicke sind hier nur schwerlich zu unterschreiten, wodurch insbesondere im Altbau derartige Fußbodenheizungssysteme eher selten verbaut werden. Hinzu kommt gerade auch im Altbau, dass etwa bei Sanierung von Holzböden derartige Untergründe in sich nicht biegesteif sind, sondern entsprechende Verformbarkeiten und Elastizitäten aufweisen, die zusätzlich für die Verlegung keramischer Beläge nachteilig sind. Auch ist durch die teilweise deutlich unterschiedlichen Ausdehnungskoeffizienten von Untergrund, Dünnbettmörtel und keramischem Belag durch die thermische Belastung aufgrund der Fußbodenheizung das Rissverhalten des keramischen Belages und des Untergrundes schwierig zu beherrschen. Es kommt daher häufig zu Rissen im Fliesenbelag, wenn der Fliesenbelag fest mit dem Untergrund verbunden wird.

Es sind Fußbodenheizungssysteme wie etwa aus der DE 25 35 522 A1, DE 87 03 642 U1 oder der DE 81 07 402 U1 bekannt, bei denen als Unterbau und für die Aufnahme der Rohrleitungen für die Heizflüssigkeit plattenförmige Bauteile aus geschäumten Werkstoffen wie etwa Styropor oder dgl. verwendet werden, in denen Nuten für die Aufnahme der Rohrleitungen vorgesehen sind. Die plattenförmigen Bauteile werden am Verlegeort ausgelegt und bieten daher zum einen eine Isolierung der Fußbodenheizung nach unten hin und zum anderen durch die Nuten über die Verlegefläche systematisch angeordnete Aufnahmekanäle für die Rohrleitungen. Zur besseren Verteilung der über die Rohrleitungen geleiteten Wärmemenge auf der Verlegefläche sind oberseitig an den plattenförmigen Bauteilen Wärmeleitelemente in Form von Wärmeleitblechen oder dgl. vorgesehen, die mit den Rohrleitungen zumindest abschnittsweise in wärmeleitendem Kontakt stehen. Um auf solcherart vorbereiteten Untergründen einen keramischen Belag sicher und auch auf Dauer rissfrei aufzubringen ist es erforderlich, eine relativ dicke Estrichschicht auf die Wärmeleitbleche aufzugießen und auszuhärten zu lassen. Neben dem Problem der zeitkostenden Aushärtungsphase des Estrichs hat ein derartiger Bodenaufbau mit dicker Estrichschicht den Nachteil, dass die Fußbodenheizung relativ träge reagiert, da immer erst die dicke Estrichschicht aufgeheizt werden muss, bevor Nutzwärme in den darüber liegenden Raum eingebracht werden kann. Gerade in der Übergangsjahreszeit oder bei ständig wechselnden Wärmebedarf ist dies von Nachteil.

Aufgabe der vorliegenden Erfindung ist es daher, ein gattungsgemäßes Aufbausystem für Bodenbeläge bei Fußbodenheizungen derart weiterzubilden, dass eine Verbesserung der mechanischen Belastbarkeit und der Verankerung an der Fliesenschicht erreichbar ist bei gleichzeitiger Verringerung der benötigten Schichtdicken hinsichtlich der Verlegung insbesondere keramischer Beläge über Fußbodenheizungssystemen.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung beschreibt ein mehrschichtiges Aufbausystem für Bodenbeläge bei Fußbodenheizungen, insbesondere für die Verlegung keramischer Bodenbeläge im Dünnbettverfahren, aufweisend unterseitig ein im wesentlichen plattenförmiges Bauteil zum flächigen Verlegen und zur Aufnahme von Rohrleitungen einer Fußbodenheizung, in dem Aufnahmeräume für die Rohrleitungen gebildet sind, wobei auf der Oberfläche des plattenförmigen Bauteils eine wärmeleitende Schicht angeordnet ist, die mit den Rohrleitungen in einer wärmeleitenden Verbindung steht. Ein derartiges Aufbausystem wird dadurch in erfindungsgemäßer Weise weiter entwickelt, dass auf der Oberfläche des plattenförmigen Bauteils eine Entkopplungsmatte angeordnet ist, die aufweist eine Entkopplungsschicht, oberseitig der Entkopplungsschicht eine Verankerungsschicht aus einem Strukturelement für eine im Bereich der Oberseite des Aufbausystems einzubringende, bei der Verarbeitung plastische und danach aushärtende Verfüllmasse, sowie oberseitig der Verankerungsschicht eine Armierungsschicht, die zumindest abschnittsweise fest an der Verankerungsschicht angeordnet ist, wobei die Verankerungsschicht zusammen mit der in diese einzubringende Verfüllmasse einen weitgehend vollständig mit der Verfüllmasse ausgefüllten biegesteifen Verbundkörper bildet, der den oberseitig angebrachten Bodenbelag von unterseitig auftretenden Veränderungen des Untergrundes und/oder des plattenförmigen Bauteils entkoppelt und die Wärme ohne Beeinträchtigung durch eine Vielzahl luftgefüllter Hohlräume in der Entkopplungsmatte verbessert von den Rohrleitungen zu dem Bodenbelag leitet, und die Entkopplungsschicht mittels eines Klebers flächig mit der Oberfläche der wärmeleitenden Schicht verbunden ist. Die Entkopplungsschicht kann hierbei vorzugsweise vliesartig ausgebildet sein.

Unter einem im wesentlichen plattenförmigen Bauteil zum flächigen Verlegen und zur Aufnahme von Rohrleitungen einer Fußbodenheizung soll im Sinne dieser Erfindung jede Art von Fußbodenaufbauten verstanden werden, die eine im wesentlichen ebene obere Auflagefläche für einen Bodenbelag bilden und in denen Platz für die Führung der Rohrleitungen der Fußbodenheizung freigehalten oder vorgesehen ist. So kann als plattenförmiges Bauteil in diesem Sinne auch z.B. eine mit Erhebungen versehene profilierte Folie, eine mit nutartigen Vertiefungen für die Rohrleitungen versehene Styroporplatte, Auflagestelzen mit Abstandshalterfunktion, separate Abstandshalter oder auch eine auf einem Estrich erhaben verlegte Rohrleitung verstanden werden, wenn diese Rohrleitung anschließend mit einem eine ebene Fläche bildendem Material umgeben wird. Wichtig ist in diesem Zusammenhang nur, dass das plattenförmige Bauteil die Rohrleitungen aufnehmen kann und eine im wesentlichen ebene Oberfläche aufweist, auf der die Entkopplungsmatte aufgebracht werden kann und die eine entsprechende Stabilität gegen Belastungen mit sich bringt.

Unter einem Strukturelement soll im Sinne dieser Erfindung jede Art von abstandshaltendem Bauteil verstanden werden, in dem durch Hohlraumbildung in der Verankerungsschicht die plastisch einbringbare und in dem Strukturelement aushärtende Verfüllmasse aufgenommen werden kann, wodurch sich die Verfüllmasse besonders innig mit dem Strukturelement verbinden und eine sehr stabile und belastbare Verbindung eingehen kann. Hier ist auch der wesentliche Unterschied zu den bekannten Trockenestrichsystemen zu sehen, die einfach flach auf einen die Rohrleitungen aufnehmenden Untergrund aufgeklebt werden und auch oberseitig keine besonders feste Verbindung zu einem z.B. keramischen Bodenbelag eingehen. Im Gegensatz hierzu wird die Verankerungsschicht oberseitig eine sehr feste Verbindung mit der Verfüllmasse eingehen, die wiederum mit dem Bodenbelag nach dem Aushärten fest verbunden ist. Hierbei kann außer einem keramischen Bodenbelag jede Art von verklebtem Bodenbelag, z.B. also auch Bodenbeläge aus Holz oder Holzwerkstoffen verwendet werden, bei denen Schäden durch das Arbeiten im Bodenaufbau durch die Fußbodenheizung hervorgerufen werden können.

Ein derartiges Aufbausystem mit der Entkopplungsmatte hat gegenüber bekannten Aufbausystemen den wesentlichen Vorteil, dass es trotz höherer zulässiger Belastbarkeiten eine sehr geringe Schichtdicke aufweist, die eine sichere Fernhaltung der möglicherweise untergrundseitig oder seitens des Fußbodenheizungssystems eingebrachten und ständig wechselnden Spannungen und Dehnungen im Bodenaufbau von der Schicht des keramischen Bodenbelags gewährleistet und daher eine geringe Aufbauhöhe des gesamten Aufbausystems ermöglicht, die bisher nicht erreichbar war. Hierzu bildet die Entkopplungsmatte aufgrund ihres Aufbaus und der Ausfüllung der Verankerungsschicht mit der Verfüllmasse einen zwar dünnschichtigen, gleichwohl aber in sich sehr stabilen Sandwichaufbau mit einer Lastverteilungsschicht in Form der Verankerungsschicht und einer Entkopplungsschicht. Die Aussteifung der Verankerungsschicht durch die üblicherweise als Fliesenkleber ausgestaltete Verfüllmasse und deren Einbringung in die Verankerungsschicht bei gleichzeitigem Aufbringen des z.B. keramischen Belages versteift die Entkopplungsmatte nach dem Aushärten der Verfüllmasse derart, dass Festigkeitseigenschaften der Entkopplungsmatte erreicht werden können, die an diejenigen wesentlich dickerer Estrichschichten herankommt und sie teilweise übertrifft. Damit können bei wesentlich geringerer Dicke des gesamten Aufbausystems die gleichen oder höhere Festigkeiten als bei herkömmlicher Konstruktion derartiger Aufbausysteme erreicht werden. Hinzu kommt, dass durch die Kombination der Entkopplungsmatte mit der Oberfläche des plattenförmigen Bauteils oder einer etwa auf der Oberfläche des plattenförmigen Bauteils aufgebrachten, üblicherweise aus Aluminiumblechen gebildeten wärmeleitenden Schicht Temperaturdehnungen dieses plattenförmigen Bauteils oder der wärmeleitenden Schicht wirksam von der Schicht des z.B. keramischen Bodenbelages entkoppelt sind und sich daher auch bei längeren Betriebszeiten der Fußbodenheizung keine Risse bilden können. Hierbei ist insbesondere durch die oberseitig angeordnete Verankerungsschicht und die darüber aufgelegte und damit befestigte Armierungsschicht dafür gesorgt, dass ein oberseitig eingebrachter Fliesenkleber als Verfüllmasse sich vollständig mit der Entkopplungsmatte verbindet und dabei dafür sorgt, dass eine entsprechende Belastbarkeit des Aufbausystems erzielt wird. Das gitterartige Strukturelement erlaubt hierbei einen besonders einfachen Aufbau der im wesentlichen die Dicke der Entkopplungsmatte bestimmenden Verankerungsschicht. Ebenfalls kann mit einem derartigen Aufbausystem eine Fußbodenheizung nahezu ohne Wartezeiten eingebaut werden, da nur die kurzzeitigen Trocknungszeiten des Fliesenklebers abzuwarten und keine langen Aushärtungszeiten des nass eingebrachten Estrichs abzuwarten sind.

Ein weiterer Vorteil kann darin gesehen werden, dass durch die weitgehend vollständige Ausfüllung der Verankerungsschicht mit der Verfüllmasse eine verbesserte Wärmeleitung in einen darüber angeordneten Raum erzielt werden kann. Wird bei anderen Entkopplungsmatten mit diversen Abstandshaltern gearbeitet, so wird der durch die Abstandshalter freigehaltene Raum in der Regel nicht vollständig ausgefüllt werden können und daher bleiben nach dem Verlegen zwischen dem plattenförmigen Bauteil und dem Bodenbelag eine Vielzahl luftgefüllter Hohlräume. Diese luftgefüllten Hohlräume wirken aber als Isolatoren und verschlechtern damit die Wärmeabgabe an den zu heizenden Raum deutlich.

Von Vorteil ist es, dass die Entkopplungsschicht flächig mit der Oberfläche des plattenförmigen Bauteils, vorzugsweise mittels eines Klebers und insbesondere eines flexiblen Fliesenklebers verbunden ist. Durch die insbesondere vollflächige Verklebung von Entkopplungsmatte und Oberfläche des plattenförmigen Bauteils ist zum einen der oberseitig angeordnete Teil des Aufbausystems sicher an dem unterseitig angeordneten Teil des Aufbausystems verankert, zum anderen können aufgrund der Temperaturdehnungen des plattenförmigen Bauteils entstehende Spannungen oder Verschiebungen wegen der Entkopplungsfunktion der Entkopplungsmatte nicht in den oberseitig der Entkopplungsmatte angeordneten keramischen Bodenbelag gelangen und dort auch nicht die geschilderten schädlichen Wirkungen entfalten. Gleichzeitig kann sich durch die Verklebung der Entkopplungsmatte mit dem Unterbau der keramische Bodenbelag auch auf Dauer nicht von dem Unterbau des Aufbausystems lösen, so dass auch eine hohe Zeitstandsfestigkeit des keramischen Bodenbelages gegeben ist.

In einer Ausgestaltung kann vorgesehen werden, dass das Strukturelement der Entkopplungsmatte als gitterartiges Strukturelement aus stabförmig gitterartig zueinander angeordneten und aneinander an den Kreuzungspunkten des Gitters festgelegten Einzelstäben gebildet ist. Ein derartiges gitterartiges Strukturelement läßt sich einfach aus gleichartig vorfertigbaren Einzelstäben herstellen und man kann daher etwa kostengünstig extrudierte Einzelstäbe verarbeiten, die auf Trommeln aufgewickelt und für das Herstellen der gitterartigen Strukturelemente jeweils zueinander positioniert werden. Damit ist die Herstellung eines solchen gitterartigen Strukturelementes sehr kostengünstig und einfach. Anders als bei bekannten Entkopplungsmatten müssen keine aufwendigen Werkzeuge gefertigt werden, die zueinander abgewinkelte oder sonstwie verformte Bereiche herstellen. Hierbei kann in weiterer Ausgestaltung dafür gesorgt werden, dass die Einzelstäbe des gitterartigen Strukturelementes eine im wesentlichen rechteckige Querschnittsform aufweisen. Insbesondere wenn die Einzelstäbe ungleichförmige Abmessungen ihrer Kanten aufweisen, läßt sich die Dicke der gitterartigen Strukturelemente einfach verändern und an unterschiedliche Bedürfnisse anpassen.

Von besonderem Vorteil ist es, wenn die sich kreuzenden Einzelstäbe des gitterartigen Strukturelementes so angeordnet sind, dass eine erste Schicht aus jeweils gleich orientierten Einzelstäben unterhalb einer zweiten Schicht aus dazu in einem Winkel angeordneten, jeweils zueinander gleich orientierten Einzelstäben besteht. Somit entfällt bei der Herstellung des gitterartigen Strukturelementes die Notwendigkeit, die Einzelstäbe wie bei textilen Geweben jeweils zueinander zu verschränken, was die Herstellung weiter vereinfacht und zum anderen dafür sorgt, dass die gleichartigen Schichten der unteren und der oberen Lage der Einzelstäbe zwischen sich jeweils entsprechende Freiräume bilden, die für die Einbringung der Verfüllmasse genutzt werden können. Es ist hierbei denkbar, dass die gitterartige Struktur aus den Einzelstäben eine Rauten-, Rechteck- oder Quadratform aufweist. Auch andere geometrische Muster sind selbstverständlich denkbar.

Eine weitere Vereinfachung lässt sich erreichen, wenn die Einzelstäbe der beiden Schichten miteinander im Kreuzungsbereich unter mechanischem Druck verschweißt sind. Etwa kann durch Aufheizen der durch Temperatureinfluß plastisch verformbaren Einzelstäbe dafür gesorgt werden, dass im Berührungsbereich der Einzelstäbe eine Erweichung und ein Verschweißen mit dem jeweils darunter liegenden Einzelstab erfolgt und sich damit ein mattenartiger Verbund der Einzelstäbe ergibt.

Weiterhin ist es denkbar, dass etwa bei einem Verschweißen der Einzelstäbe die Einzelstäbe des gitterartigen Strukturelementes zu mindestens an den Kreuzungspunkten zueinander verkippte Kantenbereiche aufweisen, wodurch sich hinterschnittene Abschnitte an den Einzelstäben bilden. Durch das plastische Umformen der Einzelstäbe im Bereich der Kreuzungspunkte durch Temperatureinfluß kommt es dazu, dass die Einzelstäbe durch den mechanischen Druck ein wenig verformt werden und dadurch ihre Ausrichtung abhängig von der Lage des mit dem Einzelstab zu verbindenden anderen Einzelstabes verändern. Dies führt dazu, dass sich Hinterschneidungen bilden, die etwa für die Verankerung in der Verfüllmasse von besonderem Vorteil sind. Die Verfüllmasse dringt aufgrund ihrer Plastizität bei der Verarbeitung in diese Hinterschneidungsbereiche ein und kann sich nach dem Aushärten wesentlich besser an der Verankerungsschicht durch die Hinterschnitte der Einzelstäbe festhalten.

Weiterhin ist es in anderer Ausgestaltung denkbar, dass die Armierungsschicht auf der Verankerungsschicht aufgeschweißt oder auch aufgeklebt ist. Hierdurch kann die Armierungsschicht zum einen gut in die Verfüllmasse eingebettet werden, zum anderen hängt sie fest an der Verankerungsschicht, die ebenfalls mit der Verfüllmasse ausgefüllt wird. Damit ergibt sich ein besonders guter Verbund zwischen der Verfüllmasse und der Armierungsschicht bzw. der Verankerungsschicht. Es ist hierbei denkbar, dass die Armierungsschicht als ein gitterartiges Gewebe gebildet ist, vorzugsweise als ein Glasfasergewebe, das zur sicheren Verankerung mit der oberseitig der Entkopplungsmatte einzubringenden Verfüllmasse dient.

Von Vorteil für die Verarbeitung größerer Flächen des Aufbausystems ist es, wenn die Armierungsschicht sich zu mindestens in einzelnen Randbereichen über die anderen Schichten hinaus erstreckt, um einen Übergang zu anderen Abschnitten des Aufbausystems zu schaffen. Hierdurch kann ein entsprechend überlappter Anschluß an den Rändern etwa einzeln verarbeitbarer Bahnen erreicht werden, der keinerlei Festigkeitsverlust an den Übergangsbereichen zwischen benachbarten Bahnen mit sich bringt.

Hinsichtlich der Abmessungen der einzelnen Schichten des Aufbausystems ist es denkbar, dass die Dicke der Verankerungsschicht zwischen 2 und 6 Millimetern und damit in einer Ausgestaltung die Gesamtdicke der Entkopplungsmatte im wesentlichen zwischen 2 und 8 Millimetern beträgt. Hierdurch baut das Aufbausystem nicht mehr als unbedingt notwendig über einem vorgegebenen Untergrund auf und kann auch bei räumlichen knappen Einbauverhältnissen unproblematisch eingesetzt werden.

Es ist von wesentlichem Vorteil für die Benutzungseigenschaften der erfindungsgemäßen Entkopplungsmatte, dass die Verankerungsschicht nach dem Einbringen der Verfüllmasse im wesentlichen vollständig mit der Verfüllmasse ausgefüllt ist und die in die ausgehärtete Verfüllmasse eingebettete Armierungsschicht eine Versteifungs- und Bewehrungsfunktion für die Abtragung von oberhalb eingeleiteter mechanischer Belastungen erfüllt. Damit wird die Lastabtragung über wesentlich größere Schichtdicken als bei bekannten Entkopplungsmatten möglich, da zusätzlich noch die ganze Schichtdicke der Verankerungsschicht bei mechanischen Belastungen mitträgt und gleichzeitig durch die Armierungsschicht verstärkt ist.

Von Vorteil ist es, wenn das plattenförmige Bauteil aus einem schaumartigen Material, insbesondere aus Styropor oder dgl. Werkstoffen besteht. Ein derartiges Schaummaterial ist einerseits leicht und bietet andererseits eine Wärmeisolierung nach unterhalb des Aufbausystems und verbessert damit die Wärmebilanz des Aufbausystems.

Hinsichtlich der Verbesserung der Wärmeabgabe der Fußbodenheizung kann auf der Oberfläche des plattenförmigen Bauteils eine wärmeleitende Schicht angeordnet werden, die mit den Rohrleitungen in einer wärmeleitenden Verbindung steht. Hierbei kann die wärmeleitende Schicht z.B. aus einzelnen Wärmeleitblechen gebildet werden, die aus einem gut wärmeleitenden Material, insbesondere aus Aluminium hergestellt sind und die aus den Rohrleitungen ausgekoppelte Wärme großflächig über den ganzen Boden verteilen und damit die an der Wärmeübertragung teilnehmenden Bodenbereiche vergrößert. Zur einfacheren Montage können hierbei die Wärmeleitbleche die Oberfläche eines aus plattenförmigen Bauteilen verlegten Aufbausystems kachelartig bedecken und zur Verbesserung der Wärmeeinkopplung jeweils mindestens einen Kontaktbereich zu einer Rohrleitung aufweisen.

Eine besonders bevorzugte Ausführungsform des erfindungsgemäßen Aufbausystems zeigt die Zeichnung.

Es zeigen:
- Figur 1: - einen Schnitt durch ein erfindungsgemäßes Aufbausystem mit einem gitterartigen Strukturelement auf einem aus Schaummaterial gebildeten plattenförmigen Bauteil zur Erläuterung des Schichtaufbaus,
- Figur 2: - eine Draufsicht auf eine erfindungsgemäße Entkopplungsmatte gemäß Figur 1.

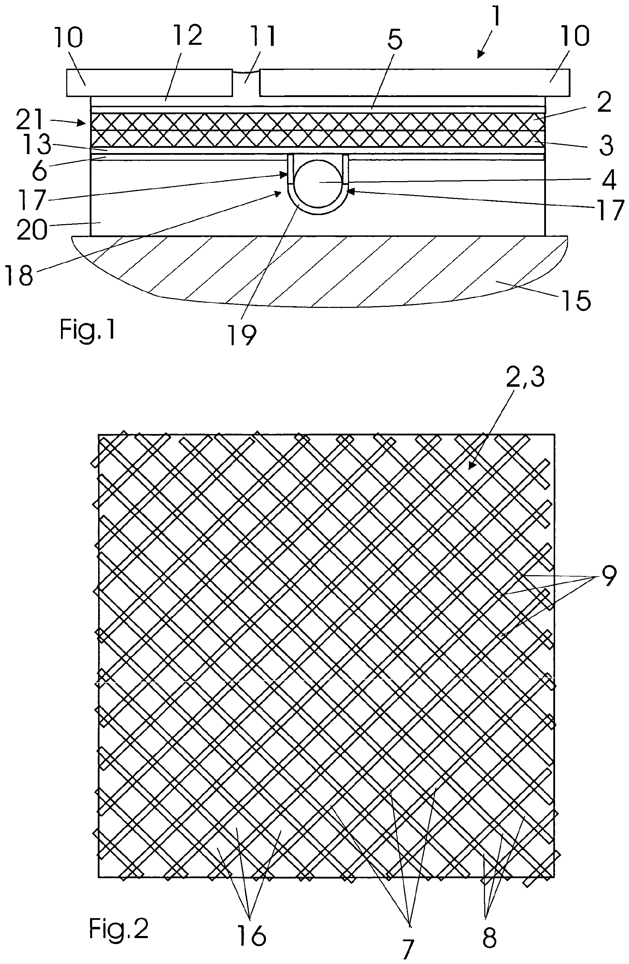

In der Figur 1 ist in einer geschnittenen Seitenansicht der Schichtaufbau eines erfindungsgemäßen mehrschichtigen Aufbausystems 1 aufgezeigt, wobei in der Figur 2 eine geschnittene Draufsicht etwa in Höhe einer mit einem gitterartigen Strukturelement versehenen Verankerungsschicht 3 zu erkennen ist. Das Aufbausystem 1 ist in der Figur 1 im Einbauzustand auf einem Untergrund 15, etwa einem Holzboden oder dergleichen dargestellt, wobei oberhalb des Aufbausystems 1 ein Fliesenbelag aus Fliesen 10 zu erkennen ist, der im Dünnbettverfahren in einem Fliesenkleber 12 verlegt ist, wobei die Fugen 11 zwischen den einzelnen Fliesen 10 ebenfalls mit dem Fliesenkleber 12 oder einem Fugenzement ausgefüllt sind.

Das erfindungsgemäße Aufbausystem 1 besteht dabei aus einem auf dem Untergrund 15 aufliegenden plattenförmigen Bauteil 20 etwa aus einem wärmeisolierenden Schaummaterial, in das oberseitig in grundsätzlich bekannter Weise Nuten 19 in einem hier nicht weiter relevanten Verlegemuster oder einem Abschnitt davon zur Aufnahme einer Rohrleitung 4 eingelassen sind. Die Rohrleitung 4 ist Bestandteil eines wärmeträgermediendurchflossenen Kreislaufes, wobei die Wärme im Bereich des plattenförmigen Bauteils 20 an die Umgebung abgegeben wird. Zur Verbesserung der Wärmeverteilung und damit des Wärmeübergangs in einen oberhalb des Aufbausystems 1 befindlichen Raum dienen die gut wärmeleitenden Wärmeleitbleche 6, die auf der raumseitigen Oberfläche des plattenförmigen Bauteils 20 im wesentlichen vollflächig in Form einzelner Kacheln angeordnet sind. Ein Randbereich der Wärmeleitbleche 6 ragt mit einer Abwinklung 17 in das Innere der Nut 19 hinein und liegt in wärmeleitendem Kontakt an der Rohrleitung 4 an, so dass die von der Rohrleitung 4 abgegebene Wärme über die Abwinklung 17 an die Wärmeleitbleche 6 geleitet und von dort vollflächig verteilt wird.

Auf den Wärmeleitblechen aufliegend und ggf. vollflächig mit diesen Wärmeleitblechen 6 verklebt ist eine Entkopplungsmatte 21 angeordnet, die zur Entkopplung der Schicht aus Fliesen 10 von dem plattenförmigen Bauteil 20 und den Wärmeleitblechen 6 dient. Diese Entkopplungsmatte 21 weist unterseitig und direkt aufliegend auf den Wärmeleitblechen 6 eine vorzugsweise vliesartige Entkopplungsschicht 13 auf, die etwa aus Polyethylen gebildet ist. Die Entkopplungsschicht 13 kann dabei mit den Wärmeleitblechen 6 mittels eines flexiblen Klebers verklebt sein, ebenfalls ist es denkbar, zur Entkopplung von Wärmeleitblechen 6 und Fliesenbelag aus den Fliesen 10 die Entkopplungsschicht 13 auf den Wärmeleitblechen 6 nur schwimmend aufzulegen. Derartige Verlegeverfahren sind grundsätzlich bekannt und sollen daher hier nicht weiter behandelt werden.

Oberhalb dieser Entkopplungsschicht 13 ist eine Verankerungsschicht 2, 3 aus einer noch später erläuterten gitterartigen Struktur mit der Entkopplungsschicht 13 verbunden. Die Verbindung kann beispielsweise durch Verkleben oder Verschweißen in grundsätzlich bekannter Weise abhängig von den verwendeten Materialien erfolgen. Diese Verankerungsschicht 2, 3 ist aus zwei einzelnen Schichten 2, 3 gebildet.

Die Verankerungsschicht 2, 3 ebenso wie die mit ihr verbundene und oberhalb angeordnete Armierungsschicht 5 dient zur Verankerung des Aufbausystems 1 an dem vorzugsweise elastischen Fliesenkleber 12 und damit der Schicht aus den Fliesen 10. Die Armierungsschicht 5 kann beispielsweise im grundsätzlich bekannter Weise aus einem gitterartig angeordneten Glasfasergewebe bestehen, das entsprechende Öffnungen und freie Bereiche aufweist, damit der Fliesenmörtel 12 möglichst tief in die Verankerungsschicht 2, 3 eintreten kann. Die Verankerungsschicht 2, 3 weist dabei in noch näher beschriebener Weise Aufnahmeräume 16 für den Fliesenkleber 12 auf und dient damit zur Verbesserung der Verankerung des Fliesenklebers 12 an dem mehrschichtigen Aufbausystem 1.

Die Festlegung der Fliesenschicht aus den Fliesen 10 erfolgt hierbei dadurch, dass der Fliesenkleber 12 vor dem Auflegen der Fliesen 10 oberseitig auf die Armierungsschicht 5 aufgebracht und mit einer Kelle möglichst tief durch die Öffnungen der Armierungsschicht 5 in die Verankerungsschicht 2, 3 hinein gedrückt wird. Der im plastischen Zustand verarbeitete Fliesenkleber 12 füllt hierbei die Aufnahmeräume 16 in der Verankerungsschicht 2, 3 weitgehend aus und umfließt dabei die in noch näher beschriebener Weise gebildeten Einzelstäbe 7, 8 der Verankerungsschicht 2, 3 nahezu vollständig. Nach dem Aushärten des Fliesenklebers 12 hat sich ein sehr fester Verband zwischen der Verankerungsschicht 2, der Armierungsschicht 5 und dem Fliesenkleber 12 gebildet, der zum einen die Fliesen 10 fest an dem Aufbausystem 1 verankert und zum anderen eine stabile, plattenartigen Ausgestaltung der Verankerungsschicht 2, 3 hervorruft. Dadurch ist das Aufbausystem 1 besonders gut belastbar durch oberseitig der Fliesen 10 aufgebrachte mechanische Belastungen.

Die gitterartige Struktur der Verankerungsschicht 2, 3 wird hierbei aus unter einem Winkel zueinander angeordneten Einzelstäben 7, 8 gebildet, die übereinander angeordnet eine zweilagige Schichtanordnung aus den Schichten 2 und 3 bilden. Die Einzelstäbe 7, 8 weisen jeweils einen etwa rechteckigen Querschnitt auf und sind an den Kreuzungspunkten 9 etwa durch thermische Verfahren miteinander verschweißt. Hierdurch bildet sich auf einfachste Weise eine Übereinanderordnung von etwa parallele Scharen der Einzelstäbe 7, die mit ebenfalls parallelen Scharen der Einzelstäbe 8, die unter einem Winkel zu der Schar der Einzelstäbe 7 liegen, verbunden sind. Zwischen den Einzelstäben 7 bzw. 8 bilden sich die Aufnahmeräume 16 in der Verankerungsschicht 2, 3.

Die gitterartige Struktur aus den Einzelstäben 7, 8 hat weiterhin den Vorteil, dass im Bereich der Kreuzungspunkte 9 beim Verschweißen der Einzelstäbe 7, 8 sich Bereiche an den Einzelstäben 7, 8 bilden, die Hinterschnitte aufweisen und daher zu einer sehr starken Verklammerung des in diese Bereiche eintretenden Fliesenmörtels 12 mit den Einzelstäben 7, 8 nach dem Erhärten führen.

Es versteht sich von selbst, dass die in der Figur 2 aufgezeigte Anordnung der Einzelstäbe 7, 8 nur beispielhaft anzusehen ist und sich jegliche Art von geometrischen Mustern aus solchen Einzelstäben 7, 8 bilden lassen, die von Vorteil für die Eigenschaften der hier genannten Entkopplungsmatte 13 ist.

### Sachnummernliste

- 1: - Aufbausystem
- 2: - Verankerungsschicht
- 3: - Verankerungsschicht
- 4: - Rohrleitung
- 5: - Armierungsschicht
- 6: - Wärmeleitblech
- 7: - Einzelstab
- 8: - Einzelstab
- 9: - Kreuzungsbereich
- 10: - Fliese
- 11: - Fuge
- 12: - Fliesenkleber
- 13: - vliesartige Entkopplungsschicht
- 14: - Überlappungsbereich
- 15: - Untergrund
- 16: - Aufnahmeräume
- 17: - Abwinklung Wärmeleitblech
- 18: - Kontakt Wärmeleitblech/Rohrleitung
- 19: - Nut
- 20: - plattenförmiges Bauteil
- 21: - Entkopplungsmatte

## Patentansprüche

1. Mehrschichtiges Aufbausystem (1) für Bodenbeläge bei Fußbodenheizungen (1), insbesondere für die Verlegung keramischer Bodenbeläge (10) im Dünnbettverfahren (12), aufweisend unterseitig ein im wesentlichen plattenförmiges Bauteil (20) zum flächigen Verlegen und zur Aufnahme von Rohrleitungen (4) einer Fußbodenheizung, in dem Aufnahmeräume (19) für die Rohrleitungen (4) gebildet sind,
wobei auf der Oberfläche des plattenförmigen Bauteils (20) eine wärmeleitende Schicht (6, 17) angeordnet ist, die mit den Rohrleitungen (4) in einer wärmeleitenden Verbindung (18) steht,
**dadurch gekennzeichnet, dass**
auf der Oberfläche des plattenförmigen Bauteils (20) eine Entkopplungsmatte (21) angeordnet ist, die aufweist
eine Entkopplungsschicht (13),
oberseitig der Entkopplungsschicht (13) eine Verankerungsschicht (2, 3) aus einem Strukturelement (2, 3) für eine im Bereich der Oberseite des Aufbausystems (1) einzubringende, bei der Verarbeitung plastische und danach aushärtende Verfüllmasse (12), sowie
oberseitig der Verankerungsschicht (2, 3) eine Armierungsschicht (5), die zumindest abschnittsweise fest an der Verankerungsschicht (2, 3) angeordnet ist, wobei die Verankerungsschicht (2, 3) zusammen mit der in diese einzubringende Verfüllmasse (12) einen weitgehend vollständig mit der Verfüllmasse (12) ausgefüllten biegesteifen Verbundkörper bildet, der den oberseitig angebrachten Bodenbelag (10) von unterseitig auftretenden Veränderungen des Untergrundes und/oder des plattenförmigen Bauteils (20) entkoppelt und die Wärme ohne Beeinträchtigung durch eine Vielzahl luftgefüllter Hohlräume in der Entkopplungsmatte verbessert von den Rohrleitungen (4) zu dem Bodenbelag (10) leitet, und
die Entkopplungsschicht (13) mittels eines Klebers flächig mit der Oberfläche der wärmeleitenden Schicht (6, 17) verbunden ist.

2. Aufbausystem (1) gemäß Anspruch 1, **dadurch gekennzeichnet, dass** die Entkopplungsschicht (13) vliesartig ausgebildet ist.

3. Aufbausystem (1) gemäß einem der vorstehenden Ansprüche, **dadurch gekennzeichnet, dass** das Strukturelement (2, 3) als gitterartiges Strukturelement (2, 3) gebildet ist.

4. Aufbausystem (1) gemäß Anspruch 3, **dadurch gekennzeichnet, dass** das gitterartige Strukturelement (2, 3) aus stabförmig gitterartig zueinander angeordneten und aneinander an den Kreuzungspunkten (9) des Gitters festgelegten Einzelstäben (7, 8) gebildet ist.

5. Aufbausystem (1) gemäß Anspruch 4, **dadurch gekennzeichnet, dass** die Einzelstäbe (7, 8) des gitterartigen Strukturelementes (2, 3) eine im wesentlichen rechteckige Querschnittsform aufweisen.

6. Aufbausystem (1) gemäß einem der Ansprüche 4 oder 5, **dadurch gekennzeichnet, dass** die sich kreuzenden Einzelstäbe (7, 8) des gitterartigen Strukturelementes (2, 3) so angeordnet sind, dass eine erste Schicht (2) aus jeweils gleich orientierten Einzelstäben (7) unterhalb einer zweiten Schicht (3) aus dazu in einem Winkel angeordneten, jeweils zueinander gleich orientierten Einzelstäben (8) besteht.

7. Aufbausystem (1) gemäß Anspruch 6, **dadurch gekennzeichnet, dass** die gitterartige Struktur aus den Einzelstäben (7, 8) eine Rauten-, Rechteck- oder Quadratform aufweist.

8. Aufbausystem (1) gemäß einem der Ansprüche 4 bis 7, **dadurch gekennzeichnet, dass** die Einzelstäbe (7, 8) der beiden Schichten (2, 3) miteinander im Kreuzungsbereich (9) unter mechanischem Druck verschweißt sind.

9. Aufbausystem (1) gemäß Anspruch 8, **dadurch gekennzeichnet, dass** die Einzelstäbe (7, 8) des gitterartigen Strukturelementes (2, 3) zumindestens an den Kreuzungspunkten (9) zueinander verkippte Kantenbereiche aufweisen, wodurch sich hinterschnittene Abschnitte an den Einzelstäben (7, 8) bilden.

10. Aufbausystem (1) gemäß einem der vorstehenden Ansprüche, **dadurch gekennzeichnet, dass** die Armierungsschicht (5) auf der Verankerungsschicht (2) aufgeschweißt ist.

11. Aufbausystem (1) gemäß einem der Ansprüche 1 bis 9, **dadurch gekennzeichnet, dass** die Armierungsschicht (5) auf der Verankerungsschicht (2) aufgeklebt ist.

12. Aufbausystem (1) gemäß einem der vorstehenden Ansprüche, **dadurch gekennzeichnet, dass** die Armierungsschicht (5) ein gitterartig gebildetes Gewebe, vorzugsweise ein Glasfasergewebe, aufweist zur sicheren Verankerung mit der oberseitig des Aufbausystems (1) einzubringenden Verfüllmasse (12).

13. Aufbausystem (1) gemäß einem der vorstehenden Ansprüche, **dadurch gekennzeichnet, dass** die Armierungsschicht (5) sich zu mindestens in einzelnen Randbereichen (14) über die anderen Schichten (2, 3, 6) hinaus erstreckt, um einen Übergang zu anderen Abschnitten des Aufbausystems (1) zu schaffen.

14. Aufbausystem (1) gemäß einem der vorstehenden Ansprüche, **dadurch gekennzeichnet, dass** die Dicke der Verankerungsschicht (2, 3) zwischen 2 und 6 Millimetern beträgt.

15. Aufbausystem (1) gemäß einem der vorstehenden Ansprüche, **dadurch gekennzeichnet, dass** die Gesamtdicke der Entkopplungsmatte zwischen 2 und 8 Millimetern beträgt.

16. Aufbausystem (1) gemäß einem der vorstehenden Ansprüche, **dadurch gekennzeichnet, dass** die in die nach dem Einbringen ausgehärtete Verfüllmasse (12) eingebettete Armierungsschicht (5) eine Versteifungs- und Bewehrungsfunktion für die Abtragung von oberhalb eingeleiteter mechanischer Belastungen erfüllt.

17. Aufbausystem (1) gemäß einem der vorstehenden Ansprüche, **dadurch gekennzeichnet, dass** das plattenförmige Bauteil (20) aus einem schaumartigen Material, insbesondere aus Styropor oder dgl. Werkstoffen besteht.

18. Aufbausystem (1) gemäß einem der vorstehenden Ansprüche, **dadurch gekennzeichnet, dass** das plattenförmige Bauteil (20) nach dem Verlegen oberseitig und in Richtung auf den Bodenbelag (10) geöffnete Aufnahmenuten (19) aufweist.

19. Aufbausystem (1) gemäß einem der vorstehenden Ansprüche, **dadurch gekennzeichnet, dass** die wärmeleitende Schicht (6) aus einzelnen Wärmeleitblechen gebildet ist, die aus einem gut wärmeleitenden Material, insbesondere aus Aluminium hergestellt sind.

20. Aufbausystem (1) gemäß Anspruch 19, **dadurch gekennzeichnet, dass** die Wärmeleitbleche (6) die Oberfläche eines aus plattenförmigen Bauteilen (20) verlegten Aufbausystems (1) kachelartig bedecken und jeweils mindestens einen Kontaktbereich (18) zu einer Rohrleitung (4) aufweisen.

## Claims

1. Multi-layer construction system (1) for floor coverings with floor heatings (1), particularly for laying ceramic floor coverings (10) using the thin-bed method (12), comprising at the lower side an essentially plate-shaped component (20) for planar laying and and for the accommodation of pipelines (4) of a floor heating system in which accommodation spaces (19) for pipelines (4) are provided,
wherein on the surface of the plate-shaped component (20) a heat-conductive layer (6, 17) is disposed, said layer standing in a heat-conductive connection (18) with the pipelines (4),
**characterized in that**
an uncoupling mat (21) is disposed on the surface of the plate-shaped component (20), having
an uncoupling layer (13),
an anchoring layer (2, 3) disposed on top of the uncoupling layer (13), said anchoring layer (2, 3) forming a structure element (2, 3) for a filler mass (12) to be filled in in a region of the top of the construction system (1), said filler mass (12) being plastic during processing and hardening afterwards, and
a reinforcement layer (5) disposed on top of and rigidly connected to the anchoring layer (2, 3), at least in sections, wherein the anchoring layer (2, 3), together with the filler mass (12) to be filled in into the anchoring layer (2, 3), forms a composite body resistant to bending which is almost completely filled with the filler mass (12), which uncouples the floor covering (10) applied on top of the construction system (1) so that the floor covering (10) is unaffected by changes in the substrate and/or the plate-shaped component (20) that occur underneath the floor covering (1) and by which the heat is conducted better between the pipes (4) and the floor covering (10) without the drawback of a plurality of air-filled cavities in the uncoupling mat, and
the uncoupling layer (13) is connected with the surface of the heat-conductive layer (6, 17) by means of an adhesive.

2. Construction system (1) according to claim 1, **characterized in that** the reinforcement layer (13) is formed of a non-woven fabric.

3. Construction system (1) according to one of the preceeding claims, **characterized in that** the structure element (2, 3) is formed as a grid-like structure element (2, 3).

4. Construction system (1) according to claim 3, **characterized in that** the grid-like structure element (2, 3) is formed from individual rods (7, 8) that are disposed in grid-like manner relative to one another, and fixed in place on one another at intersection points (9) of the rods (7, 8).

5. Construction system (1) according to claim 4, **characterized in that** each individual rod (7, 8) of the grid-like structure element (2, 3) has an essentially rectangular cross-sectional shape.

6. Construction system (1) according to one of the claims 4 or 5, **characterized in that** the crossing individual rods (7, 8) of the grid-like structure (2, 3) element are disposed in such a manner that a first layer (2) consists of individual rods (7) oriented each in the same way, below a second layer (3) of individual rods (8) oriented each in the same way relative to one another and disposed at an angle to the first layer (2).

7. Construction system (1) according to claim 6, **characterized in that** the grid-like structure of the individual rods (7, 8) forms a pattern of diamond shapes, rectangle shapes, or square shapes.

8. Construction system (1) according to one of the claims 4 to 7, **characterized in that** the individual rods (7, 8) of the two layers (2, 3) are bonded to one another in intersection regions (9) under mechanical pressure.

9. Construction system (1) according to claim 8, **characterized in that** the individual rods (7, 8) of the grid-like structure element (2, 3) have edge regions tilted relative to one another, at least at intersection points (9), thereby forming undercut sections on the individual rods (7, 8).

10. Construction system (1) according to one of the preceeding claims, **characterized in that** the reinforcement layer (5) is bonded onto the anchoring layer (2).

11. Construction system (1) according to one of the preceeding claims, **characterized in that** the reinforcement layer (5) is glued onto the anchoring layer (2).

12. Construction system (1) according to one of the preceeding claims, **characterized in that** the reinforcement layer (5) is formed of a grid-like woven textile, preferably a glass cloth, for secure anchoring with the filler mass (12) filled in from top of the construction system (1).

13. Construction system (1) according to one of the preceeding claims, **characterized in that** the reinforcement layer (5) extends beyond the other layers (2, 3, 6) at least in individual edge regions (14), to create a transition to other sections of the construction system (1).

14. Construction system (1) according to one of the preceeding claims, **characterized in that** the thickness of the anchoring layer (2, 3) amounts to between 2 and 6 millimeters.

15. Construction system (1) according to one of the preceeding claims, **characterized in that** the total thickness of the uncoupling mat amounts to between 2 and 8 millimeters.

16. Construction system (1) according to one of the preceeding claims, **characterized in that** the reinforcement (5) layer is embedded in the filler mass (12) so that when the filler mass is hardened after processing, the reinforcement layer fulfills a stiffening and reinforcement function for the transfer of mechanical stresses introduced from above.

17. Construction system (1) according to one of the preceeding claims, **characterized in that** the plate-shaped component (20) consists of a foam-like material, espacially made of styrofoam or similar materials.

18. Construction system (1) according to one of the preceeding claims, **characterized in that** the plate-shaped component (20) has accommodation grooves (19) that are on a top of the plate-shaped component (20) after laying, and open in a direction towards the floor covering (10).

19. Construction system (1) according to one of the preceeding claims, **characterized in that** the heat-conductive layer (6) is formed from individual heat-conductive sheets, which are produced from a well conductive material, espacially from aluminium.

20. Construction system (1) according to claim 19, **characterized in that** the heat-conductive sheets (6) cover the surface of the construction system (1), said system being laid with several of said plate-shaped components (20) in the manner of tiles, and said sheets (6) each have at least one contact region (18) to a pipeline (4).

## Revendications

1. Système de construction (1) multicouche pour des revêtements de sol dans le cas de chauffages par le sol (1), en particulier pour la pose de revêtements de sol (10) en céramique lors du procédé à lit mince (12), présentant côté inférieur un composant (20) sensiblement en forme de dalle destinée à être posé à plat et servant à recevoir des conduites tubulaires (4) d'un chauffage par le sol, dans lequel des espaces de réception (19) pour les conduites tubulaires (4) sont formés,
dans lequel est disposée sur la surface du composant (20) en forme de dalle une couche (6, 17) thermoconductrice, qui est en communication thermoconductrice (18) avec les conduites tubulaires (4),
**caractérisé en ce que**
est disposé sur la surface du composant (20) en forme de dalle un tapis de découplage (21), qui présente
une couche de découplage (13),
côté supérieur de la couche de découplage (13), une couche d'ancrage (2, 3) composée d'un élément de structure (2, 3) pour une masse de remplissage (12) à introduire dans la zone du côté supérieur du système de construction (1), plastique lors de la transformation puis durcissant, ainsi que
côté supérieur de la couche d'ancrage (2, 3), une couche de renforcement (5), qui est disposée au moins par endroits de manière solidaire au niveau de la couche d'ancrage (2, 3), dans lequel la couche d'ancrage (2, 3) forme conjointement avec la masse de remplissage (12) à introduire dans cette dernière un corps composite rigide en flexion largement rempli en totalité avec la masse de remplissage (12), qui découple le revêtement de sol (10) installé côté supérieur de modifications apparaissant côté inférieur du sol et/ou du composant (20) en forme de dalle et achemine la chaleur de manière améliorée sans préjudice à travers une pluralité d'espaces creux remplis d'air dans le tapis de découplage depuis les conduites tubulaires (4) vers le revêtement de sol (10), et
la couche de découplage (13) est reliée à plat à la surface de la couche (6, 17) thermoconductrice au moyen d'une colle.

2. Système de construction (1) selon la revendication 1, **caractérisé en ce que** la couche de découplage (13) est réalisée à la manière d'un non-tissé.

3. Système de construction (1) selon l'une quelconque des revendications précédentes, **caractérisé en ce que** l'élément de structure (2, 3) est formé sous la forme d'un élément de structure (2, 3) de type grille.

4. Système de construction (1) selon la revendication 3, **caractérisé en ce que** l'élément de structure (2, 3) de type grille est formé à partir de barres individuelles (7, 8) disposées les unes par rapport aux autres à la manière d'une grille en forme de barre et fixées les unes contre les autres au niveau des points d'intersection (9) de la grille.

5. Système de construction (1) selon la revendication 4, **caractérisé en ce que** les barres individuelles (7, 8) de l'élément de structure (2, 3) de type grille présentent une forme de section transversale sensiblement rectangulaire.

6. Système de construction (1) selon l'une quelconque des revendications 4 ou 5, **caractérisé en ce que** les barres individuelles (7, 8) se croisant de l'élément de structure (2, 3) de type grille sont disposées de telle sorte qu'une première couche (2) est constituée de barres individuelles (7) respectivement à orientation identique sous une deuxième couche (3) composées de barres individuelles (8) disposées selon un angle par rapport à ces dernières, respectivement à orientation identique les unes par rapport aux autres.

7. Système de construction (1) selon la revendication 6, **caractérisé en ce que** la structure de type grille composée des barres individuelles (7, 8) présente une forme de losange, de rectangle ou de carré.

8. Système de construction (1) selon l'une quelconque des revendications 4 à 7, **caractérisé en ce que** les barres individuelles (7, 8) des deux couches (2, 3) sont soudées les unes aux autres dans la zone d'intersection (9) sous pression mécanique.

9. Système de construction (1) selon la revendication 8, **caractérisé en ce que** les barres individuelles (7, 8) de l'élément de structure (2, 3) de type grille présentent au moins des zones d'arête basculées les unes par rapport aux autres au niveau des points d'intersection (9), ce qui permet de former des sections contre-dépouillées au niveau des barres individuelles (7, 8).

10. Système de construction (1) selon l'une quelconque des revendications précédentes, **caractérisé en ce que** la couche de renforcement (5) est appliquée par soudage sur la couche d'ancrage (2).

11. Système de construction (1) selon l'une quelconque des revendications 1 à 9, **caractérisé en ce que** la couche de renforcement (5) est appliquée par collage sur la couche d'ancrage (2).

12. Système de construction (1) selon l'une quelconque des revendications précédentes, **caractérisé en ce que** la couche de renforcement (5) présente un tissu formé à la manière d'une grille, de préférence un tissu en fibres de verre, aux fins de l'ancrage fiable avec la masse de remplissage (12) à introduire côté supérieur du système de construction (1).

13. Système de construction (1) selon l'une quelconque des revendications précédentes, **caractérisé en ce que** la couche de renforcement (5) s'étend au moins dans certaines zones de bord (14) au-delà des autres couches (2, 3, 6) pour créer un passage vers d'autres sections du système de construction (1).

14. Système de construction (1) selon l'une quelconque des revendications précédentes, **caractérisé en ce que** l'épaisseur de la couche d'ancrage (2, 3) est comprise entre 2 et 6 millimètres.

15. Système de construction (1) selon l'une quelconque des revendications précédentes, **caractérisé en ce que** l'épaisseur totale du tapis de découplage est comprise entre 2 et 8 millimètres.

16. Système de construction (1) selon l'une quelconque des revendications précédentes, **caractérisé en ce que** la couche de renforcement (5) intégrée dans la masse de remplissage (12) durcie après l'introduction remplit une fonction de raidissement et d'armature pour l'élimination de contraintes mécaniques appliquées au-dessus.

17. Système de construction (1) selon l'une quelconque des revendications précédentes, **caractérisé en ce que** le composant (20) en forme de dalle est constitué d'un matériau de type mousse, en particulier de polystyrène ou de matériaux similaires.

18. Système de construction (1) selon l'une quelconque des revendications précédentes, **caractérisé en ce que** le composant (20) en forme de dalle présente après la pose des rainures de réception (19) ouvertes côté supérieur et en direction du revêtement de sol (10).

19. Système de construction (1) selon l'une quelconque des revendications précédentes, **caractérisé en ce que** la couche (6) thermoconductrice est formée à partir de diverses tôles thermoconductrices, qui sont fabriquées à partir d'un matériau à thermoconduction satisfaisante, en particulier à partir d'aluminium.

20. Système de construction (1) selon la revendication 19, **caractérisé en ce que** les tôles (6) thermoconductrices recouvrent à la manière d'un carrelage la surface d'un système de construction (1) posé à partir de composants (20) en forme de dalle et présentent respectivement au moins une zone de contact (18) avec une conduite tubulaire (4).
